# FASCICULE DE BREVET EUROPEEN

(11) **EP 2 376 988 B1**
(45) Date de publication et mention de la délivrance du brevet: **10.07.2013**
(21) Numéro de dépôt: 09803852.4
(22) Date de dépôt: 14.12.2009
(51) Int. Cl.: G05B 23/02

(54) **STANDARDISATION DE DONNÉES UTILISÉES POUR LA SURVEILLANCE D'UN MOTEUR D'AÉRONEF.**
STANDARDISIERUNG VON DATEN VERWENDETEN ZUR ÜBERWACHUNG EINES FLUGZEUGTRIEBWERKS
STANDARDISATION OF DATA USED FOR MONITORING AN AIRCRAFT ENGINE

(30) Priorité: 15.12.2008 FR 0858608
(43) Date de publication de la demande: 19.10.2011
(73) Titulaire: Snecma, 75015 Paris (FR)
(72) Inventeur: LACAILLE, Jérôme, F-93110 Rosny Sous Bois (FR)
(74) Mandataire: Boura, Olivier
(86) Numéro de dépôt international: PCT/FR2009/052510
(87) Numéro de publication internationale: WO 2010/076468

(56) Documents cités:
- EP-A- 1 103 926
- EP-A- 1 204 076
- US-A- 4 215 412

## Description

### Domaine de l'invention

La présente invention se rapporte au domaine de surveillance d'un moteur d'aéronef. En particulier, l'invention concerne une standardisation de données utilisées pour la surveillance du moteur d'aéronef.

Dans de nombreuses industries, telles que l'aéronautique ou le spatial, il est fondamental de maîtriser le comportement du moteur pour améliorer l'efficacité de conception et de maintenance. Ceci dépend de la capacité d'acquérir et de traiter des données mesurées par des capteurs de surveillance.

Un des problèmes rencontrés par les experts du moteur lors de l'interprétation ou l'analyse des mesures est le fait qu'un moteur donné ne fonctionne jamais sous exactement les mêmes conditions. En effet, pour un moteur d'aéronef lors de vols opérationnels, les conditions d'acquisition de mesures sont systématiquement différentes : elles dépendent du pilotage, de la météo, du trajet, de l'état du moteur, etc.

Cependant, un détecteur d'anomalie efficace doit être capable de détecter une faute en n'importe quel contexte. Toutefois, il est très coûteux de maintenir une application de monitoring en continu et de plus, il est très difficile de réaliser des calculs spécifiques pour chaque phase de vol et chaque condition extérieure.

Ainsi, un outil de surveillance se doit de fonctionner identiquement quelles que soient les conditions extérieures d'acquisition et de données. Alors, il est nécessaire avant toute surveillance, de se ramener à un environnement standard.

Actuellement, la méthode de standardisation est une méthode de normalisation classique qui se contente de calculer la moyenne de chaque indicateur de surveillance défini à partir des mesures recueillies sur le moteur d'aéronef, de calculer la différence entre cette moyenne et la mesure lue, et puis de diviser la différence par un écart-type. La moyenne et l'écart-type sont calculés a priori sur une série de données précédemment numérisées.

L'inconvénient de cette méthode est qu'elle ne sait ni gérer les dépendances vis-à-vis de données exogènes ni gérer les relations de dépendances entre les indicateurs eux-mêmes.

Il existe d'autres méthodes qui consistent à créer des modes de normalisations multivariés à partir d'algorithmes de compression comme l'ACP (Analyse en composantes principales). Cependant, celles-ci réclament un important temps de calcul et aboutissent à des indicateurs sans dimension qui ne peuvent pas être interprétés par les experts du moteur.

### Objet et résumé de l'invention

La présente invention concerne un procédé de standardisation de données utilisées pour la surveillance d'un moteur d'aéronef, comportant les étapes suivantes :
- recueillir au cours du temps des mesures temporelles sur ledit moteur d'aéronef ;
- calculer à partir desdites mesures temporelles un ensemble d'indicateurs Y = (yₗ,..., y*ⱼ*,..., y*ₘ*) spécifiques à des éléments dudit moteur ;
- identifier à partir desdites mesures temporelles un ensemble de données exogènes X = (xₗ,...,x) représentatives du contexte extérieur intervenant sur ledit ensemble d'indicateurs Y ;
- définir un modèle multidimensionnel conditionnel gérant simultanément les indicateurs dudit ensemble d'indicateurs Y en prenant en compte ledit ensemble de données exogènes X pour former un ensemble d'estimateurs Ŷ = (ŷₗ,...,ŷⱼ,...,ŷₘ) correspondant audit ensemble d'indicateurs Y = (yₗ,...,yⱼ,...,yₘ) ; et
- normaliser chaque estimateur ŷⱼ en fonction d'une valeur de référence de l'indicateur correspondant yⱼ et d'un écart entre ledit chaque estimateur ŷⱼ et ledit indicateur correspondant yⱼ pour former un ensemble de valeurs standardisées *Ỹ* = (ỹₗ,...,ỹⱼ,...,ỹₘ).

Ce procédé permet de standardiser les indicateurs en supprimant des dépendances vis-à-vis du contexte extérieur tout en gérant les relations d'interdépendances stochastiques entre les indicateurs eux-mêmes. Ainsi, la surveillance du moteur d'aéronef peut fonctionner identiquement quelles que soient les conditions extérieures d'acquisition. En effet, les valeurs standardisées peuvent être considérées comme des observations acquises dans des conditions strictement identiques pour chaque surveillance du moteur ou chaque vol de l'aéronef.

Conformément à l'invention, la définition dudit modèle multidimensionnel conditionnel comporte les étapes suivantes :
- construire pour chaque indicateur yⱼ dudit ensemble d'indicateurs *Y*, un espace de projection *E*^{(j)} = *σ(Y^{(j)}, X)* engendré par des transformations analytiques d'un sous-ensemble d'indicateurs Y^{(j)} = (yₗ,..., yⱼ₋₁, yⱼ₊₁,...yₘ) comprenant tous les indicateurs dudit ensemble d'indicateurs Y sauf ledit chaque indicateur yⱼ et par ledit ensemble de données exogènes X ; et
- calculer pour ledit chaque indicateur yⱼ dudit ensemble d'indicateurs Y un estimateur correspondant ŷⱼ en projetant selon une technique de régression ledit chaque indicateur yⱼ sur ledit espace de projection E^{(j)} = σ(Y^{(j)}, X) formant ainsi ledit ensemble d'estimateurs Ŷ = (ŷₗ,..., ŷⱼ,...,ŷₘ).

Les transformations analytiques peuvent bien entendu comporter une transformation identité. Ainsi l'espace peut être formé à partir du sous-ensemble d'indicateurs et de l'ensemble de données exogènes ainsi que par des applications analytiques sur ces mêmes données. Ceci permet d'apporter des informations sur la physique des données que l'on standardise et permet éventuellement de rentrer une connaissance qui peut améliorer la pertinence du modèle. De plus, les valeurs standardisées ne sont pas des grandeurs abstraites mais bien des signatures standardisées des indicateurs initiaux, dans les mêmes dimensions, tout en étant débarrassées des relations de dépendance avec le contexte d'acquisition. Ceci permet non seulement de ramener la surveillance du moteur d'aéronef à un environnement standard mais permet aussi de faciliter l'interprétation de la surveillance par les experts.

Avantageusement, lesdites mesures temporelles sont recueillies en fonctionnement normal dudit moteur d'aéronef.

Ainsi, il est très facile d'acquérir ces mesures temporelles car le plus souvent le moteur fonctionne normalement. De plus, en exploitant uniquement des données opérationnelles normales pour se calibrer, le modèle multidimensionnel est facile à contrôler en terme de robustesse vu la grande disponibilité de telles mesures.

Chaque valeur standardisée ỹⱼ peut être calculée en ajoutant une valeur moyenne ou de référence de l'indicateur correspondant y̅ⱼ à un écart entre l'indicateur correspondant yⱼ et l'estimateur correspondant ŷⱼ selon l'équation suivante ỹⱼ = y̅ⱼ + (yⱼ - y̅ⱼ).

Ainsi, les valeurs standardisées sont faciles à calculer et continuent d'avoir une signification claire pour les experts tout en étant indépendantes des conditions de vol.

Avantageusement, le procédé comporte une analyse d'une robustesse de chaque estimateur selon une technique d'évaluation croisée permettant de choisir un espace de projection optimal.

La technique d'évaluation croisée est très facile à implémenter à cause de la grande quantité des données opérationnelles normales.

Selon une particularité de la présente invention, ledit espace de projection est construit suivant des critères d'expertises à l'aide de formulations physiques des relations entre les indicateurs ainsi qu'entre les indicateurs et les données exogènes.

Ainsi, en identifiant la manière dont les données sont reliées entre elles à partir des connaissances physiques des mesures, l'expert moteur reste à tout moment capable d'interpréter et d'interagir avec le modèle.

Selon une autre particularité, ledit espace est construit de manière automatique en utilisant un réseau de neurones.

Ainsi, quand l'expert ne dispose pas de connaissances a priori sur les relations entre les indicateurs eux-mêmes et/ou les relations entre les indicateurs et les données exogènes, le modèle est capable d'en rechercher lui-même en analysant les données en fonctionnement normal.

En particulier, ledit réseau de neurones peut être un modèle à noyaux.

Avantageusement, les indicateurs dudit ensemble d'indicateurs Y = (yₗ,...,yⱼ,..., yₘ) sont spécifiques à des éléments physiques et/ou logiques dudit moteur.

Ainsi, les indicateurs peuvent indiquer un élément particulier ou une tâche spécifique de tout un ensemble d'éléments du moteur permettant alors de mieux analyser la performance et l'état du moteur.

Les indicateurs dudit ensemble d'indicateurs Y=(yₗ,...,yⱼ,...,yₘ) peuvent être calculés suivant des critères d'expertise en construisant une AMDEC.

Ceci permet d'exploiter la connaissance des experts en motorisation pour recueillir les indicateurs utiles à l'analyse du moteur.

Les indicateurs peuvent être identifiés par un repérage de points particuliers ou de fonctions particulières résumant des détails ou des formes de certaines courbes représentatives desdites mesures temporelles.

Avantageusement, les données exogènes X = (xₗ,..., xₙ) intervenant sur les indicateurs sont identifiées suivant des critères d'expertise par une analyse de dépendance permettant de lister les données contextuelles liées aux indicateurs.

Selon une particularité de la présente invention, ladite régression peut être une régression linéaire.

L'invention vise également un système de standardisation de données utilisées pour la surveillance d'un moteur d'aéronef comportant :
- des moyens pour recueillir au cours du temps des mesures temporelles sur ledit moteur d'aéronef ;
- des moyens pour calculer à partir desdites mesures temporelles un ensemble d'indicateurs Y = (yₗ,..., yⱼ,..., yₘ) spécifiques à des éléments dudit moteur ;
- des moyens pour identifier à partir desdites mesures temporelles un ensemble de données exogènes X = (xₗ,..., xₙ) représentatives du contexte extérieur intervenant sur ledit ensemble d'indicateurs *Y* ;
- des moyens pour définir un modèle multidimensionnel conditionnel gérant simultanément les indicateurs dudit ensemble d'indicateurs *Y* en prenant en compte ledit ensemble de données exogènes X pour former un ensemble d'estimateurs *Ŷ* = (ŷₗ,...,ŷⱼ,...,ŷₘ) correspondant audit ensemble d'indicateurs *Y* = (yₗ,..., yⱼ,..., yₘ), comprenant :
   des moyens pour construire pour chaque indicateur yⱼ dudit ensemble d'indicateurs Y, un espace de projection *E^{(j)} = σ(Y^{(j)}, X)* engendré par des transformations analytiques d'un sous-ensemble d'indicateurs *Y^{(j)} = (yₗ,..., yⱼ₋ₗ, yⱼ₊ₗ,...yₘ)* comprenant tous les indicateurs dudit ensemble d'indicateurs Y sauf ledit chaque indicateur *yⱼ* et par ledit ensemble de données exogènes X ; et
   des moyens pour calculer pour ledit chaque indicateur yⱼ dudit ensemble d'indicateurs *Y* un estimateur correspondant ŷⱼ en projetant selon une technique de régression ledit chaque indicateur yⱼ sur ledit espace de projection E^{(j)} *= σ(Y^{(j)}, X)* formant ainsi ledit ensemble d'estimateurs Ŷ = (ŷₗ,...,ŷⱼ,...,ŷₘ); et
- des moyens pour normaliser chaque estimateur ŷⱼ en fonction d'une valeur de référence de l'indicateur correspondant yⱼ et d'un écart entre ledit chaque estimateur ŷⱼ et ledit indicateur correspondant yⱼ pour former un ensemble de valeurs standardisées *Ỹ* = (ỹₗ,...,ỹⱼ,...,ỹₘ).

L'invention vise aussi un programme d'ordinateur comportant des instructions pour la mise en oeuvre du procédé de standardisation selon les étapes ci-dessus lorsqu'il est exécuté par des moyens de traitement.

### Brève description des dessins

D'autres particularités et avantages du dispositif et du procédé selon l'invention ressortiront mieux à la lecture de la description faite ci-après, à titre indicatif mais non limitatif, en référence aux dessins annexés sur lesquels :
- la figure 1 illustre des moyens matériels mis en oeuvre dans le système ou procédé qui peuvent être employés pour la standardisation de données utilisées pour la surveillance d'un moteur d'aéronef selon l'invention ;
- la figure 2 est un organigramme illustrant les étapes principales pour standardiser les données utilisées pour la surveillance du moteur d'aéronef de la figure 1 ;
- la figure 3 est une représentation graphique illustrant la température d'huile juste avant le démarrage du moteur d'aéronef de la figure 1 ;
- la figure 4 est une représentation graphique illustrant des délais d'étapes de démarrage du moteur d'aéronef de la figure 1 ;
- les figures 5A et 5B sont des représentations graphiques illustrant le délai d'atteindre une accélération maximale de l'arbre basse pression après chaque démarrage du moteur d'aéronef de la figure 1 ; et
- les figures 6A et 6B sont des représentations graphiques illustrant le gradient des températures des gaz d'échappement mesurées sur le moteur d'aéronef de la figure 1.

### Description détaillée de modes de réalisation

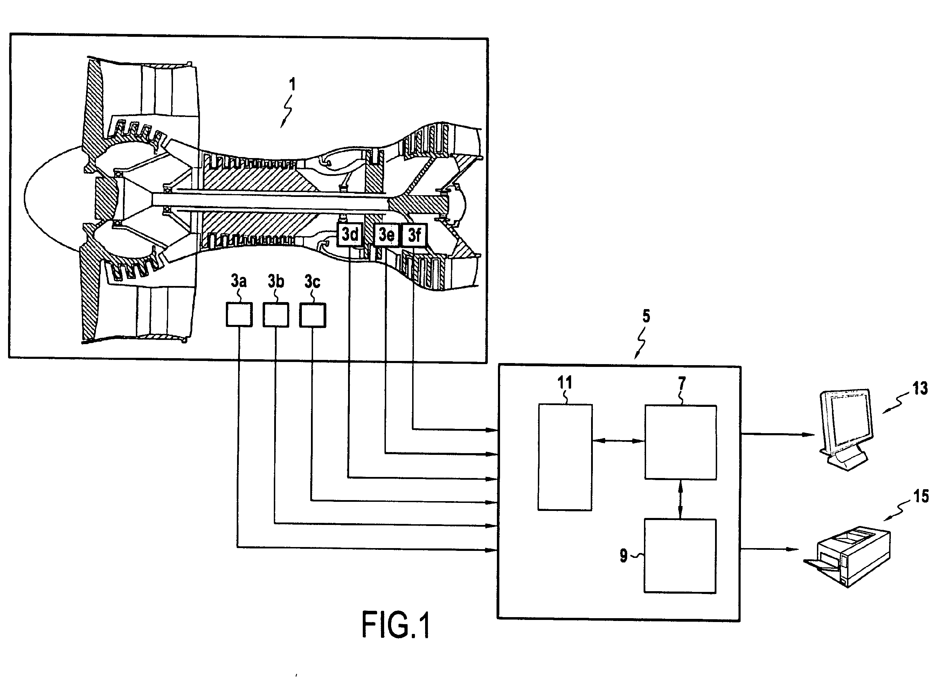

La figure 1 illustre des moyens matériels mis en oeuvre dans le système ou procédé de standardisation de données utilisées pour la surveillance d'un moteur d'aéronef 1 selon l'invention.

Ce système comprend plusieurs capteurs 3a-3f pour mesurer des données reflétant l'état du moteur 1 ainsi que des données de contexte externes ou internes pouvant affecter le fonctionnement du moteur 1. Le système comprend aussi des moyens de traitement 5 de l'information tel un calculateur ou ordinateur pouvant être utilisé pour l'exécution d'un programme informatique conçu pour mettre en oeuvre le procédé selon l'invention. Les moyens de traitement 5 comprennent les moyens matériels que l'on trouve habituellement dans un ordinateur. Plus particulièrement, ces moyens de traitement 5 comprennent une unité centrale 7 qui exécute les séquences d'instructions du programme selon le procédé de l'invention, une mémoire centrale 9 qui stocke les données et programmes en cours d'exécution, des supports ou moyens de stockage 11 de données numériques conservant les données, des périphériques d'entrées (capteurs 3a-3f, clavier, souris, ...) ainsi que des périphériques de sorties (écran 13, imprimante 15,...) pour percevoir le résultat de la standardisation.

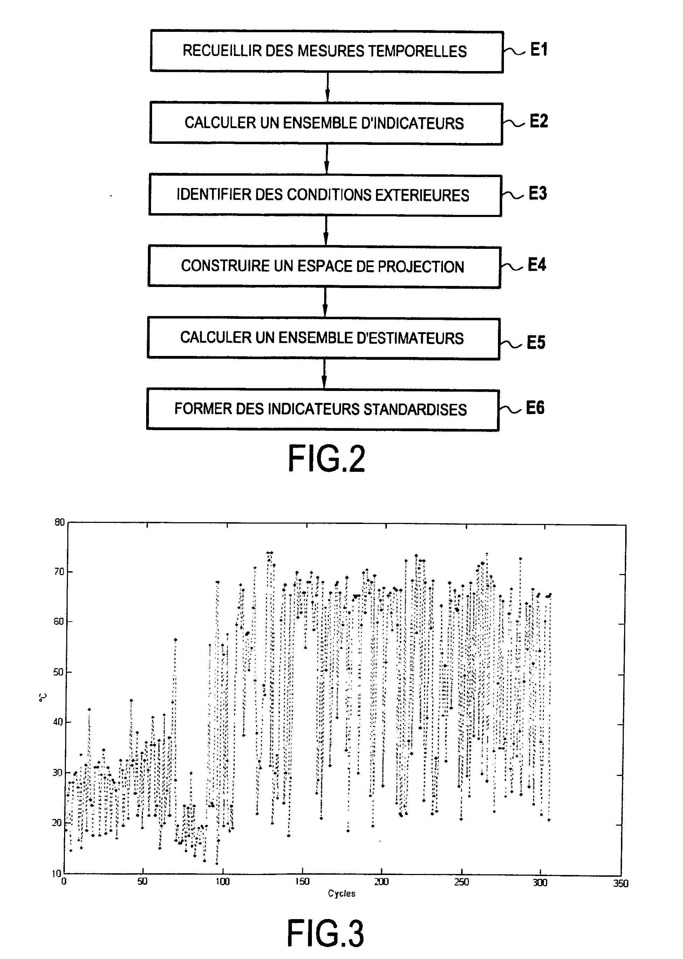

Conformément à l'invention, la figure 2 illustre les étapes principales implémentées par les moyens de traitement 5 pour standardiser les données utilisées pour la surveillance du moteur d'aéronef.

L'étape E1 concerne l'identification des mesures brutes à partir desquelles il sera a priori possible d'extraire de l'information utile sur le moteur 1 d'aéronef à surveiller. En effet, les moyens de traitement 5 sont configurés pour recueillir et numériser au cours du temps des mesures temporelles acquises par les capteurs 3d-3f sur le moteur 1 d'aéronef en exploitation ainsi que des mesures contextuelles acquises par les capteurs 3a-3c représentatives des conditions environnementales extérieures.

Dans des conditions opérationnelles, le nombre de capteurs 3a-3f n'est pas très important, mais acquises à des fréquences différentes, les éléments que l'on peut en retenir peuvent être très nombreux. Par exemple, pour un moteur CFM, on peut installer 9 à 12 capteurs pour mesurer des pressions, des flux et des températures à une faible fréquence de 32Hz et 4 capteurs pour mesurer des vitesses de rotation des arbres du moteur 1 et des vibrations du moteur 1 à une haute fréquence allant jusqu'à 20kHz ou plus.

Par ailleurs, on notera que, les mesures temporelles peuvent être très facilement recueillies en fonctionnement normal du moteur 1 d'aéronef vu la grande disponibilité de telles mesures.

L'étape E2 concerne la définition des indicateurs. Ainsi, les moyens de traitement 5 sont configurés pour calculer à partir des mesures temporelles un ensemble d'indicateurs *Y =* (yₗ,..., *yⱼ,..., yₘ)* spécifiques à des éléments du moteur 1.

On notera que les indicateurs peuvent être spécifiques à des éléments physiques indiquant un élément particulier du moteur 1 ou à des éléments logiques indiquant une tâche spécifique de tout un ensemble d'éléments du moteur 1. Plus particulièrement, un élément physique est un composant réel du moteur 1 comme par exemple, le réacteur de base HP, les vannes stators, etc. Un système ou élément logique se réfère à un groupe de composants du moteur 1 réalisant une tâche spécifique comme le système de démarrage, le système de lubrification, la performance, etc.

Par ailleurs, les indicateurs *Y = (yₗ,..., yⱼ,..., yₘ)* peuvent être calculés suivant des critères d'expertise. Par exemple, les experts peuvent formuler les indicateurs dans un document appelé AMDEC (Analyse des modes de défaillance, de leurs effets et de leur criticité) ou FMECA (Failure Modes, Effects and Criticality Analysis, en anglais). Ce document liste les défaillances, les équipements concernés, les causes, les conséquences, mais aussi les indicateurs calculés à partir des mesures précédentes permettant de relever le phénomène avec pour chacun une description des effets observés. De plus, chaque faute peut être décrite par l'effet observé sur les résultats spécifiques calculés à partir des mesures temporelles.

Les indicateurs peuvent être identifiés par des « pointeurs » comme par exemple, par un repérage de points particuliers ou de fonctions particulières résumant des détails ou des formes de certaines courbes représentatives des mesures temporelles.

Par exemple, pour analyser la capacité de démarrage du moteur 1, les experts vont extraire différentes durées et valeurs spécifiques ou des calculs qui ont une signification claire sur le démarrage. Parmi ces indicateurs, on peut définir un indicateur de délai indiquant le temps qu'il faut pour que l'arbre HP (Haute pression) du moteur atteigne une vitesse donnée après l'ouverture de la soupape de carburant. On peut aussi considérer un indicateur sur l'accélération maximale de l'arbre HP ainsi que beaucoup d'autres indicateurs similaires.

Pour l'analyse de performance, les experts vont par exemple, se focaliser sur les mesures de températures, de pressions, et de l'écoulement du carburant. Ensuite, ils peuvent construire des indicateurs d'usures s'exprimant par exemple, en termes de consommation de carburant d'un vol à un autre.

Pour l'analyse de portée d'arbre du moteur 1, les spécialistes de vibration vont isoler des fréquences spécifiques des temps de rotation dépendant des dimensions des différents éléments de l'arbre : rayon des anneaux, diamètres des billes, etc.

L'étape E3 concerne l'identification des conditions extérieures. Plus particulièrement, les moyens de traitement 5 sont configurés pour identifier à partir des mesures temporelles un ensemble de données exogènes X = (x₁,...,xₙ) représentatives du contexte extérieur intervenant sur l'ensemble d'indicateurs Y.

En effet, chaque mesure recueillie lors d'un vol est réalisée dans des conditions externes ou internes particulières. Ces conditions qui peuvent avoir un impact sur la lecture des indicateurs sont enregistrées. Les conditions externes peuvent comprendre les températures et pressions extérieures, l'attitude et la vitesse relative de l'avion, mais aussi le lieu de vol (au dessus de la mer, le désert, la terre, etc.), les conditions météo (pluie, neige, gel, etc.), l'hygrométrie, et ainsi de suite. Les conditions internes peuvent concerner l'utilisation spécifique du moteur (vitesse de l'arbre, température des gaz d'échappement, type du carburant, etc.). Toutes ces mesures peuvent être considérées comme des données exogènes.

A titre d'exemple de données exogènes, la figure 3 est une représentation graphique illustrant la température d'huile juste avant le démarrage du moteur. On remarque tout de suite qu'il existe deux types de démarrages correspondant à des démarrages à froid et des démarrages à chaud. Ceci est typiquement un cas où une donnée interne (température d'huile) est considérée comme une donnée de contexte qui différencie de manière claire, deux classes de démarrages qui doivent être prises en compte dans l'analyse des données.

Avantageusement, les données exogènes X=(xₗ,...,xₙ) intervenant sur les indicateurs peuvent être identifiées suivant des critères d'expertise. Par ailleurs, une analyse de dépendance automatique (par étude des corrélations ou de l'information mutuelle) permet aussi de rapidement lister les données contextuelles liées aux indicateurs.

On notera qu'en plus du fait que les indicateurs peuvent dépendre du contexte, il peut aussi exister des relations entre les indicateurs eux-mêmes. On ne peut pas directement supprimer la dépendance vis-à-vis du contexte indicateur par indicateur, car le résultat serait la destruction de toute information contenue dans les indicateurs. En général, les experts moteur ont conscience du contenu de l'information dans les relations d'interdépendance et connaissent aussi la difficulté de construire des indicateurs indépendants.

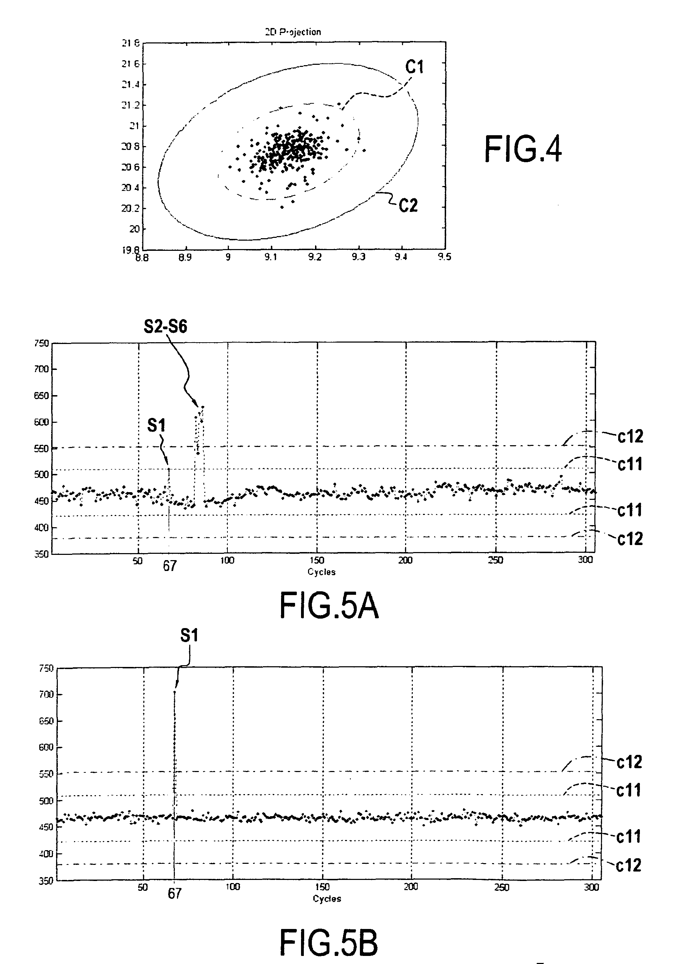

A titre d'exemple, la figure 4 illustre une représentation graphique du délai de démarrage du moteur 1 en utilisant un groupe auxiliaire de puissance APU, en fonction du temps nécessaire pour que le moteur 1 atteigne sa vitesse nominale au sol. La courbe en traits pointillés c1 désigne un premier niveau de dispersion autour de la moyenne et la courbe en traits continus c2 désigne un second niveau de dispersion autour de la moyenne.

Ainsi, la distribution des points de la figure 4 montre clairement qu'il existe une relation entre le délai de démarrage du moteur 1 et le temps nécessaire pour que ce dernier atteigne sa vitesse nominale au sol. Bien entendu, la relation entre ces deux indicateurs peut dépendre des données exogènes comme la température extérieure ou la pression de sortie de l'APU.

Les étapes E4 et E5 concernent la construction d'estimateurs associés aux indicateurs calculés à l'étape E2.

En effet, les moyens de traitement 5 sont configurés pour définir un modèle multidimensionnel conditionnel gérant simultanément les indicateurs de l'ensemble d'indicateurs *Y* en prenant en compte l'ensemble de données exogènes X pour former un ensemble d'estimateurs *Ŷ* = (ŷₗ*..., ŷⱼ,..., ŷₘ)* correspondant à l'ensemble d'indicateurs Y = (yₗ,...,yⱼ,...,yₘ).

Plus particulièrement, l'étape E4 consiste à construire pour chaque indicateur donné yⱼ de l'ensemble d'indicateurs Y, un espace de projection E^{(j)} = σ(Y^{(j)}, X). Cet espace de projection est engendré par l'ensemble de données exogènes X et par des transformations analytiques d'un sous-ensemble d'indicateurs *Y^{(j)} =(yₗ,...,yⱼ₋₁, yⱼ₋₁,...yₘ)* comprenant tous les indicateurs de l'ensemble d'indicateurs *Y* sauf l'indicateur donné *yⱼ.* Les transformations analytiques expriment des relations physiques entre les indicateurs et peuvent être définies par les experts. Ces transformations analytiques peuvent comporter en plus d'une transformation identité, des transformations ou fonctions linéaires ou non linéaires apportant des informations sur des corrélations entre les différents indicateurs.

L'étape E5 consiste à calculer pour chaque indicateur donné *yⱼ* de l'ensemble d'indicateurs *Y*, un estimateur correspondant *ŷⱼ* en projetant selon une technique de régression l'indicateur donné *yⱼ* sur l'espace de projection *E^{(j)} = σ(Y^{(j)}, X)* formant ainsi l'ensemble d'estimateurs *Ŷ* = *(ŷₗ,...,ŷⱼ,...,ŷₘ).*

Autrement dit, pour tout indicateur *yⱼ,* soient : *Y* = *(yₗ,..., yⱼ,..., yₘ)* le vecteur de m indicateurs, *X* le vecteur de données exogènes, et *Y⁽ⁱ⁾ = (y₁,..., yⱼ₋₁, yⱼ₊₁,...yₘ)* le vecteur de tous les indicateurs sauf *yⱼ.* Alors, on projette par une méthode de régression, l'indicateur *yⱼ* sur l'espace de projection *E^{(j)} = σ(Y^{(j)}, X)* pour déterminer l'estimateur *ŷⱼ.* La régression peut être de type réseau de neurones en utilisant par exemple, un modèle à noyaux et une minimisation par moindres carrés. En variante, la régression peut être de type linéaire.

Ainsi, pour chaque indicateur, on construit une régression des observations sur l'espace engendré par les autres indicateurs, les données de contexte, des expressions issues de l'analyse des experts et d'autres fonctions implémentées par exemple, sous la forme d'un modèle de noyau. L'espace construit, sur lequel on projette les observations est de bien plus grande dimension que le nombre d'indicateurs initiaux.

Avantageusement, l'espace de projection peut être construit suivant des critères d'expertises à l'aide de formulations physiques des relations entre les indicateurs ainsi qu'entre les indicateurs et les données exogènes. En effet, les connaissances métier de l'expert peuvent être exploitées non seulement pour l'identification des variables mais aussi dans la définition de l'espace de projection. Par exemple, il peut y avoir des mesures d'un paramètre qui dépendent de manière logarithmique des mesures d'un autre paramètre. D'autres exemples classiques peuvent concerner les variables d'état comme l'enthalpie ou l'énergie. A titre d'exemple, si l'énergie correspond à un produit de deux indicateurs, alors pour une énergie constante l'inverse d'un indicateur permet de prédire l'autre indicateur.

D'un autre côté, quand l'expert ne dispose pas de connaissance a priori sur des relations entre les variables, une analyse automatique en fonctionnement normal permet de trouver de telles relations.

Ainsi, l'espace de projection peut aussi être construit de manière automatique en utilisant un réseau de neurones par exemple, du type modèle à noyaux. Dans ce cas, toutes les options peuvent être utilisées simultanément par défaut. De plus, on peut considérer des transformations non-linéaires de l'indicateur qui dès fois peuvent être plus facile à prédire. Ces transformations peuvent être sélectionnées parmi une liste de possibilités (logarithme, inverse, saturation,...). Par défaut, toutes les transformations acceptables sont testées et une sélection est réalisée selon un critère de robustesse.

L'analyse de robustesse de chaque estimateur peut être effectuée selon une technique d'évaluation croisée permettant de choisir le meilleur espace de projection. Cette technique peut être réappliquée sur des fonctions inversibles de chaque estimateur projeté, issues de l'analyse d'experts. La meilleure régression sera conservée, par exemple, il peut être plus facile de modéliser le logarithme d'un indicateur que sa valeur elle-même.

A l'étape E6, les moyens de traitement 5 sont configurés pour normaliser chaque estimateur *ŷⱼ* en fonction d'une valeur de référence de l'indicateur correspondant *yⱼ* et d'un écart entre chaque estimateur donné *ŷⱼ* et l'indicateur correspondant *yⱼ* pour former un ensemble de valeurs standardisées *Ỹ = (ỹₗ,... ỹⱼ,..., ỹₘ).*

En particulier, le résidu du modèle (l'observation moins l'estimation) peut être ajouté à une valeur moyenne ou de référence considérée comme une valeur standard de l'indicateur.

Autrement dit, chaque valeur standardisée *ỹⱼ* peut être calculée en ajoutant la valeur moyenne ou de référence de l'indicateur correspondant *y̅ⱼ* à l'écart entre l'indicateur correspondant *yⱼ* et l'estimateur correspondant *ŷⱼ* selon l'équation suivante *ỹⱼ = y̅ⱼ* + (*yⱼ - ŷⱼ*).

Ce calcul donne une nouvelle observation dans les mêmes dimensions que les indicateurs initiaux et montre la différence entre ce qui est réellement observé et ce qui devrait être observé en prenant en compte les données exogènes et les relations entre les indicateurs eux mêmes.

Les indicateurs standardisés vont osciller autour de leurs valeurs moyennes respectives en fonction des erreurs à la prédiction par le modèle. Une observation normale est naturellement une observation pour laquelle tous les résidus sont faibles (c'est-à-dire, inférieur à un multiple de l'écart type σ de la distribution de l'erreur estimée qui est de toute façon connue). En revanche, pour une observation anormale, les signaux vont être éloignés de leurs valeurs moyennes.

Un premier exemple est donné par les figures 5A et 5B qui illustrent les représentations graphiques d'un indicateur représentant le délai d'atteindre l'accélération maximale de l'arbre basse pression BP (en ordonnée) après chaque démarrage du moteur (en abscisse). Les traits pointillés c11 désignent les niveaux +/- 3σ autour de la valeur moyenne et les traits discontinus c12 désignent les niveaux +/- 6σ autour de la valeur moyenne.

La figure 5A illustre les signaux de l'indicateur initial avant la standardisation et la figure 5B illustre les signaux de l'indicateur après la standardisation selon l'invention.

La figure 5A montre qu'il existe 6 signaux s1-s6 (entre le cycle de démarrage numéro 50 et celui numéro 90) qui s'écartent de la moyenne et qui sont plus lents à démarrer.

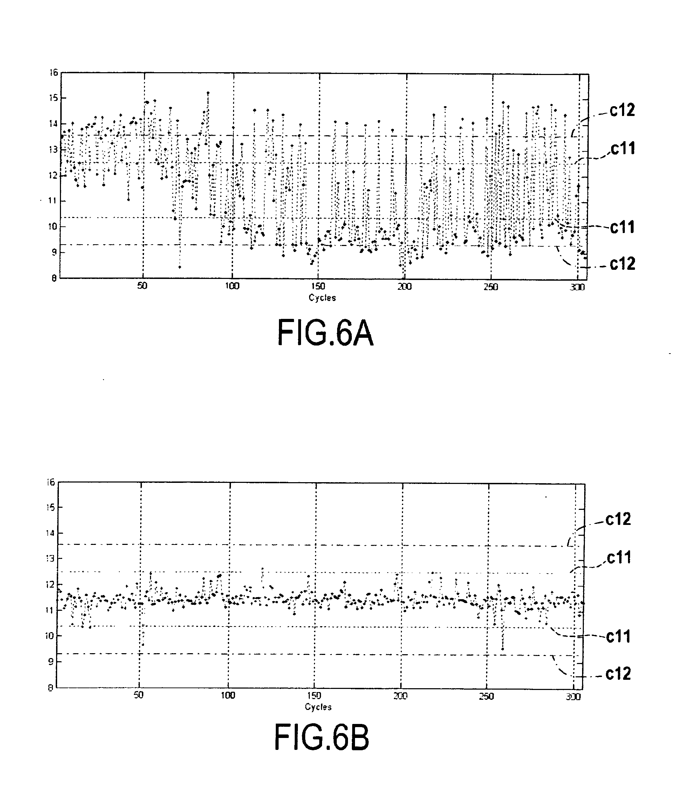

Cependant, la standardisation de la figure 5B qui supprime les dépendances vis-à-vis du contexte extérieur montre que seul le signal s1 au cycle de démarrage 67 s'écarte de la moyenne. Ceci montre clairement que l'éloignement des signaux s2-s6 était simplement dû à des conditions extérieures et que seul le signal s1 qui de plus est plus éloigné de la moyenne que celui de la figure 6A persiste. En effet, le signal s1 est un singleton ou point aberrant qui s'écarte nettement de l'ensemble des observations et qui est dû au fait que les experts qui construisent les données des observations normales oublient souvent quelques aberrations. De toute façon ce singleton est écarté lors de l'analyse de la robustesse qui peut être effectuée selon une technique d'évaluation croisée ou vraisemblance compensée. Cette analyse sélectionne de manière aléatoire un sous ensemble de mesures pour l'étalonnage et teste les résultats sur d'autres observations.

Un autre exemple est donné par les figures 6A et 6B. La figure 6A est une représentation graphique des valeurs d'un indicateur initial non standardisé représentant le gradient des températures des gaz d'échappement mesurées sur un moteur d'aéronef en fonctionnement normal lors des vols successifs.

Etant donné que le moteur fonctionne normalement, les disparités des valeurs observées sur la figure 6A par rapport à la valeur moyenne sont essentiellement dues aux différentes conditions d'acquisition.

En revanche, la figure 6B illustre la représentation graphique après standardisation de l'inducteur de la figure 6A, selon la présente invention. Ceci montre que les valeurs de l'indicateur standardisé peuvent être considérées comme des observations acquises dans des conditions strictement identiques pour chaque surveillance du moteur lors de chaque vol de l'aéronef. En effet, la standardisation des indicateurs selon la présente invention supprime les dépendances vis-à-vis du contexte extérieur et prend en compte des relations d'interdépendances stochastiques entre les indicateurs eux-mêmes.

La figure 6B montre qu'en fonctionnement normal du moteur, la probabilité d'observer un signal écarté de la valeur moyenne d'une valeur supérieure à 3σ est inférieure à 3.10⁻³ et celle supérieure à 6σ est inférieure à 2.10⁻⁹. Ceci montre clairement que la surveillance d'un élément du moteur d'aéronef peut fonctionner identiquement quelles que soient les conditions extérieures d'acquisition. Ainsi, l'application à un outil de détection d'anomalie s'en trouve non seulement simplifiée mais bien plus facile à interpréter par les experts.

Par ailleurs, selon une implémentation préférée, les différentes étapes du procédé selon l'invention sont exécutées au moyen d'instructions de code de programme.

En conséquence, l'invention vise aussi un produit programme d'ordinateur, ce programme étant susceptible d'être mis en oeuvre dans les moyens de traitement ou un système informatique, ce programme comportant des instructions de code adaptées à la mise en oeuvre d'un procédé selon l'invention tel que décrit ci-dessus. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

On peut utiliser un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou un autre moyen d'enregistrement.

D'autre part, le support d'informations peut être un support transmissible tel qu'un signal électrique ou optique, qui peut être acheminé via un câble électrique ou optique, par radio ou par d'autres moyens.

Alternativement, le support d'informations peut être un circuit intégré dans lequel le programme est incorporé, le circuit étant adapté pour exécuter ou pour être utilisé dans l'exécution du procédé en question.

## Revendications

1. Procédé de standardisation de données utilisées pour la surveillance d'un moteur (1) d'aéronef, **caractérisé en ce qu'**il comporte les étapes suivantes :
- recueillir au cours du temps des mesures temporelles sur ledit moteur (1) d'aéronef ;
- calculer à partir desdites mesures temporelles un ensemble d'indicateurs *Y* = *(yₗ,...,yⱼ,...,yₘ)* spécifiques à des éléments dudit moteur ;
- identifier à partir desdites mesures temporelles un ensemble de données exogènes *X = (xₗ,...,xₙ)* représentatives du contexte extérieur intervenant sur ledit ensemble d'indicateurs *Y* ;
- construire pour chaque indicateur *yⱼ* dudit ensemble d'indicateurs *Y*, un espace de projection *E^{(j)} = σ(Y^{(j)}, X)* engendré par des transformations analytiques d'un sous-ensemble d'indicateurs *Y^{(j)} =(yₗ,..., yⱼ₋₁, yⱼ₊₁,...yₘ)* comprenant tous les indicateurs dudit ensemble d'indicateurs *Y* sauf ledit chaque indicateur *yⱼ* et par ledit ensemble de données exogènes *X ;* et
- calculer pour ledit chaque indicateur *yⱼ* dudit ensemble d'indicateurs *Y* un estimateur correspondant *ŷⱼ* en projetant selon une technique de régression ledit chaque indicateur *yⱼ* sur ledit espace de projection *E^{(j)} = σ(Y^{(j)}, X)* formant un ensemble d'estimateurs *Ŷ = (ŷₗ,..., ŷⱼ,..., ŷₘ)* correspondant audit ensemble d'indicateurs *Y = (yₗ,..., yⱼ,..., yₘ) ;* et
- normaliser chaque estimateur *ŷⱼ* en fonction d'une valeur de référence de l'indicateur correspondant *yⱼ* et d'un écart entre ledit chaque estimateur *ŷⱼ* et ledit indicateur correspondant *ŷⱼ* pour former un ensemble de valeurs standardisées *Ỹ* = *(ŷₗ,... ỹⱼ,...,ỹₘ).*

2. Procédé selon la revendication 1, **caractérisé en ce que** lesdites mesures temporelles sont recueillies en fonctionnement normal dudit moteur d'aéronef.

3. Procédé selon l'une quelconque des revendications 1 et 2, **caractérisé en ce que** chaque valeur standardisée *ỹⱼ* est calculée en ajoutant une valeur moyenne ou de référence de l'indicateur correspondant *y̅ⱼ* à un écart entre l'indicateur correspondant *yⱼ* et l'estimateur correspondant *ŷⱼ* selon l'équation suivante *ỹⱼ = y̅ⱼ + (yⱼ - ŷ).*

4. Procédé selon l'une quelconque des revendications 1 à 3, **caractérisé en ce qu'**il comporte une analyse d'une robustesse de chaque estimateur selon une technique d'évaluation croisée permettant de choisir un espace de projection optimal.

5. Procédé selon l'une quelconque des revendications 1 à 4, **caractérisé en ce que** ledit espace de projection est construit suivant des critères d'expertises à l'aide de formulations physiques des relations entre les indicateurs ainsi qu'entre les indicateurs et les données exogènes.

6. Procédé selon l'une quelconque des revendications 1 à 5, **caractérisé en ce que** ledit espace est construit de manière automatique en utilisant un réseau de neurones.

7. Procédé selon la revendication 6, **caractérisé en ce que** ledit réseau de neurones est un modèle à noyaux.

8. Procédé selon l'une quelconque des revendications 1 à 7, **caractérisé en ce que** les indicateurs dudit ensemble d'indicateurs *Y* = *(yₗ,..., yⱼ,..., yₘ)* sont spécifiques à des éléments physiques et/ou logiques dudit moteur.

9. Procédé selon l'une quelconque des revendications 1 à 8, **caractérisé en ce que** les indicateurs dudit ensemble d'indicateurs *Y* = *(yₗ,...,yⱼ,...,yₘ)* sont calculés suivant des critères d'expertise en construisant une AMDEC.

10. Procédé selon l'une quelconque des revendications 1 à 9, **caractérisé en ce que** les indicateurs sont identifiés par un repérage de points particuliers ou de fonctions particulières résumant des détails ou des formes de certaines courbes représentatives desdites mesures temporelles.

11. Procédé selon l'une quelconque des revendications 1 à 10, **caractérisé en ce que** les données exogènes *X* = *(xₗ...,xₙ)* intervenant sur les indicateurs sont identifiées suivant des critères d'expertise par une analyse de dépendance permettant de lister les données contextuelles liées aux indicateurs.

12. Procédé selon l'une quelconque des revendications 1 à 11, **caractérisé en ce que** ladite régression est une régression linéaire.

13. Système de standardisation de données utilisées pour la surveillance d'un moteur (1) d'aéronef, **caractérisé en ce qu'**il comporte :
- des moyens (5) pour recueillir au cours du temps des mesures temporelles sur ledit moteur (1) d'aéronef ;
- des moyens (5) pour calculer à partir desdites mesures temporelles un ensemble d'indicateurs *Y = (yₗ,..., yⱼ,..., yₘ)* spécifiques à des éléments dudit moteur ;
- des moyens (5) pour identifier à partir desdites mesures temporelles un ensemble de données exogènes *X = (xₗ,...,xₙ)* représentatives du contexte extérieur intervenant sur ledit ensemble d'indicateurs *Y* ;
- des moyens (5) pour construire pour chaque indicateur *yⱼ* dudit ensemble d'indicateurs *Y*, un espace de projection *E^{(j)} = σ(Y^{(j)}, X)* engendré par des transformations analytiques d'un sous-ensemble d'indicateurs *Y^{(j)} =(yₗ,..., yⱼ₋₁, yⱼ₊₁,...yₘ)* comprenant tous les indicateurs dudit ensemble d'indicateurs *Y* sauf ledit chaque indicateur *yⱼ* et par ledit ensemble de données exogènes *X ;* et
- des moyens (5) pour calculer pour ledit chaque indicateur *yⱼ* dudit ensemble d'indicateurs *Y* un estimateur correspondant *ŷⱼ* en projetant selon une technique de régression ledit chaque indicateur *yⱼ* sur ledit espace de projection *E*^{(j)} = *σ(Y^{(j)}, X)* formant un ensemble d'estimateurs *Ŷ = (ŷₗ,..., ŷⱼ,..., ŷₘ)* correspondant audit ensemble d'indicateurs *Y = (yₗ,..., yⱼ,..., yₘ) ;* et
- des moyens (5) pour normaliser chaque estimateur *ŷ*ⱼ en fonction d'une valeur de référence de l'indicateur correspondant *yⱼ* et d'un écart entre ledit chaque estimateur *ŷⱼ* et ledit indicateur correspondant *yⱼ* pour former un ensemble de valeurs standardisées *Ỹ* = *(ŷₗ,...., ỹⱼ,..., ỹₘ).*

14. Programme d'ordinateur comportant des instructions pour la mise en oeuvre du procédé de standardisation selon les revendications 1 à 12 lorsqu'il est exécuté par des moyens de traitement.

## Patentansprüche

1. Verfahren zur Standardisierung von Daten, die für die Überwachung eines Flugzeugtriebwerks (1) verwendet werden, **dadurch gekennzeichnet, daß** es die folgenden Schritte umfaßt:
- Aufnehmen von Zeitmessungen an dem Flugzeugtriebwerk (1) im Laufe der Zeit,
- Berechnen anhand der Zeitmessungen einer Menge von für Elemente des Triebwerks spezifischen Indikatoren Y = (y₁,..., yⱼ,..., yₘ),
- Identifizieren, anhand der Zeitmessungen, einer Menge von exogenen Daten X = (x₁,... xₙ), welche für den sich auf die Menge von Indikatoren Y auswirkenden äußeren Kontext repräsentativ sind,
- Konstruieren, für jeden Indikator yⱼ der Menge von Indikatoren Y, eines Projektionsraums E^{(j)} = σ(Y^{(j)}, X), der durch analytische Transformationen einer Teilmenge von Indikatoren Y^{(j)} = (y₁,..., yⱼ₋₁, yⱼ₊₁..., yₘ), welche alle Indikatoren der Menge von Indikatoren Y bis auf den jeden Indikator yⱼ umfaßt, sowie durch die Menge von exogenen Daten X erzeugt wird, und
- Berechnen, für den jeden Indikator yⱼ der Menge von Indikatoren Y, einer entsprechenden Schätzfunktion ŷⱼ, indem gemäß einer Regressionstechnik der jede Indikator yⱼ auf den Projektionsraum E^{(j)} = σ(Y^{(j)}, X) projiziert wird, wodurch eine Menge von Schätzfunktionen Y = (ŷ₁,..., yⱼ,..., ŷₘ), die der Menge von Indikatoren Y = (y₁,..., yⱼ,..., yₘ) entspricht, gebildet wird, und
- Normalisieren einer jeden Schätzfunktion ŷⱼ in Abhängigkeit eines Referenzwertes des entsprechenden Indikators yⱼ und einer Abweichung zwischen der jeden Schätzfunktion ŷⱼ und dem entsprechenden Indikator yⱼ, um eine Menge von standardisierten Werten Ỹ = (ỹ₁,..., yⱼ,..., ỹₘ) zu bilden.

2. Verfahren nach Anspruch 1, **dadurch gekennzeichnet, daß** die Zeitmessungen im Normalbetrieb des Flugzeugtriebwerks aufgenommen werden.

3. Verfahren nach einem der Ansprüche 1 und 2, **dadurch gekennzeichnet, daß** jeder standardisierte Wert ỹⱼ dadurch berechnet wird, daß ein Mittel- oder Referenzwert des entsprechenden Indikators y̅ⱼ einer Abweichung zwischen dem entsprechenden Indikator yⱼ und der entsprechenden Schätzfunktion ŷⱼ nach der folgenden Gleichung hinzugefügt wird, ỹⱼ = y̅ⱼ + (yⱼ - ŷⱼ).

4. Verfahren nach einem der Ansprüche 1 bis 3, **dadurch gekennzeichnet, daß** es eine Analyse einer Robustheit jeder Schätzfunktion nach einer Überkreuzbewertungstechnik, die ermöglicht, einen optimalen Projektionsraum zu wählen, umfaßt.

5. Verfahren nach einem der Ansprüche 1 bis 4, **dadurch gekennzeichnet, daß** der Projektionsraum gemäß Expertenkriterien mit Hilfe von physischen Formulierungen der Beziehungen zwischen den Indikatoren sowie zwischen den Indikatoren und den exogenen Daten konstruiert wird.

6. Verfahren nach einem der Ansprüche 1 bis 5, **dadurch gekennzeichnet, daß** der Raum unter Verwendung eines neuronalen Netzes automatisch konstruiert wird.

7. Verfahren nach Anspruch 6, **dadurch gekennzeichnet, daß** das neuronale Netz ein Kernmodell ist.

8. Verfahren nach einem der Ansprüche 1 bis 7, **dadurch gekennzeichnet, daß** die Indikatoren der Menge von Indikatoren Y = (y₁,..., yⱼ,..., yₘ) für physische und/oder logische Elemente des Triebwerks spezifisch sind.

9. Verfahren nach einem der Ansprüche 1 bis 8, **dadurch gekennzeichnet, daß** die Indikatoren der Menge von Indikatoren Y = (y₁,..., yⱼ,..., yₘ) gemäß Expertenkriterien unter Erstellen einer FMECA berechnet werden.

10. Verfahren nach einem der Ansprüche 1 bis 9, **dadurch gekennzeichnet, daß** die Indikatoren durch ein Kennzeichnen von besonderen Punkten oder von besonderen Funktionen, die Details oder Formen von einigen für die Zeitmessungen repräsentativen Kurven zusammenfassen, identifiziert werden.

11. Verfahren nach einem der Ansprüche 1 bis 10, **dadurch gekennzeichnet, daß** die exogenen Daten X = (x₁,... xₙ), die sich auf die Indikatoren auswirken, gemäß Expertenkriterien durch eine Abhängigkeitsanalyse, die ermöglicht, die mit den Indikatoren verbundenen Kontextdaten aufzulisten, identifiziert werden.

12. Verfahren nach einem der Ansprüche 1 bis 11, **dadurch gekennzeichnet, daß** die Regression eine lineare Regression ist.

13. System zur Standardisierung von Daten, die für die Überwachung eines Flugzeugtriebwerks (1) verwendet werden, **dadurch gekennzeichnet, daß** es umfaßt:
- Mittel (5) zum Aufnehmen von Zeitmessungen an dem Flugzeugtriebwerk (1) im Laufe der Zeit,
- Mittel (5) zum Berechnen anhand der Zeitmessungen einer Menge von für Elemente des Triebwerks spezifischen Indikatoren Y = (y₁,..., yⱼ,..., yₘ),
- Mittel (5) zum Identifizieren, anhand der Zeitmessungen, einer Menge von exogenen Daten X = (x₁,... xₙ), welche für den sich auf die Menge von Indikatoren Y auswirkenden äußeren Kontext repräsentativ sind,
- Mittel (5) zum Konstruieren, für jeden Indikator yⱼ der Menge von Indikatoren Y, eines Projektionsraums E^{(j)} = σ(Y^{(j)}, X), der durch analytische Transformationen einer Teilmenge von Indikatoren Y^{(j)} = (y₁,..., yⱼ₋₁, yⱼ₊₁ ..., yₘ), welche alle Indikatoren der Menge von Indikatoren Y bis auf den jeden Indikator yⱼ umfaßt, sowie durch die Menge von exogenen Daten X erzeugt wird, und
- Mittel (5) zum Berechnen, für den jeden Indikator yⱼ der Menge von Indikatoren Y, einer entsprechenden Schätzfunktion ŷⱼ, indem gemäß einer Regressionstechnik der jede Indikator yⱼ auf den Projektionsraum E^{(j)} = σ(Y^{(j)}, X) projiziert wird, wodurch eine Menge von Schätzfunktionen Ŷ = (ŷ₁,..., ŷⱼ,..., ŷₘ), die der Menge von Indikatoren Y = (y₁,..., yⱼ,..., yₘ) entspricht, gebildet wird, und
- Mittel (5) zum Normalisieren einer jeden Schätzfunktion ŷⱼ in Abhängigkeit eines Referenzwertes des entsprechenden Indikators yⱼ und einer Abweichung zwischen der jeden Schätzfunktion ŷⱼ und dem entsprechenden Indikator yⱼ, um eine Menge von standardisierten Werten Ỹ = (ỹ₁,..., ỹⱼ,..., ỹₘ) zu bilden.

14. Computerprogramm, umfassend Befehle für die Durchführung des Standardisierungsverfahrens nach den Ansprüchen 1 bis 12, wenn es durch Verarbeitungsmittel ausgeführt wird.

## Claims

1. A method of standardizing data used for monitoring an aeroengine (1), the method being **characterized in that** it comprises the following steps:
· collecting time-series measurements over time concerning said aeroengine (1);
· from said time-series measurements, calculating a set of indicators *Y = (y₁,..., yⱼ,..., yₘ)* that are specific to elements of said engine;
· from said time-series measurements, identifying an exogenous data set X = (x₁,...,xₙ) , representative of the external context acting on said set of indicators *Y;*
· for each indicator yⱼ of said set of indicators *Y,* constructing a projection space *E^{(j)} = σ(Y^{(j)}, X)* generated by analytic transformations of a subset of indicators *y^{(j)} = (Y₁,..., yⱼ₋₁,yⱼ₊₁,...yₘ)* comprising all of the indicators of said set of indicators *Y* except each said indicator *yⱼ* and by said exogenous data set *X;*
. for each said indicator *yⱼ* of said set of indicators *Y*, calculating a corresponding estimator *ŷⱼ* by projecting said indicator *yⱼ* using a regression technique onto said projection space *E^{(j)} = σ(Y^{(j)},X),* thereby forming a set of estimators *Ŷ = (ŷ₁,...,ŷⱼ,...,ŷₘ)* corresponding to said set of indicators *Y = (y₁,..., yⱼ,..., yₘ) ;* and
· normalizing each estimator *ŷⱼ* as a function of a reference value for the corresponding indicator *yⱼ* and of a difference between each said estimator *ŷ*ⱼ and said corresponding indicator yⱼ to form a set of standardized values *Ỹ* = *(ỹ₁,...,ỹⱼ...,ỹₘ).*

2. A method according to claim 1, **characterized in that** said time-series measurements are collected during normal operation of said aeroengine.

3. A method according to claim 1 or claim 2, **characterized in that** each standardized value ỹⱼ is calculated by adding a mean or reference value for the corresponding indicator *y̅ⱼ* to a difference between the corresponding indicator *yⱼ* and the corresponding estimator *ŷⱼ,* using the following equation: *ỹⱼ = y̅ⱼ + (yⱼ-ŷ).*

4. A method according to any one of claims 1 to 3, **characterized in that** it includes analyzing robustness of each estimator using a cross evaluation technique serving to select an optimum projection space.

5. A method according to any one of claims 1 to 4, **characterized in that** said projection space is constructed using expert criteria with the help of physical formulations of relationships between the indicators and between the indicators and the exogenous data.

6. A method according to any one of claims 1 to 5, **characterized in that** said space is constructed automatically by using a neural network.

7. A method according to claim 6, **characterized in that** said neural network is a kernel model.

8. A method according to any one of claims 1 to 7, **characterized in that** the indicators of said set of indicators *Y = (y₁,...,yⱼ,...,yₘ)* are specific to physical and/or logical elements of said engine.

9. A method according to any one of claims 1 to 8, **characterized in that** the indicators of said set of indicators *Y = (y₁,..., yⱼ,..., yₘ)* are calculated using expert criteria by constructing an FMECA.

10. A method according to any one of claims 1 to 9, **characterized in that** the indicators are identified by referencing particular points or particular functions summarizing details or shapes of certain curves representative of said time-series measurements.

11. A method according to any one of claims 1 to 10, **characterized in that** the exogenous data *X = (x₁,...,xₙ)* acting on the indicators is identified using expert criteria by dependency analysis enabling the context data associated with the indicators to be listed.

12. A method according to any one of claims 1 to 11, **characterized in that** said regression is a linear regression.

13. A system for standardizing data used for monitoring an aeroengine (1), the system being **characterized in that** it comprises:
· means (5) for operating over time to collect time-series measurements concerning said aeroengine (1);
· means (5) for calculating from said time-series measurements a set of indicators *Y=(y₁,..., yⱼ,..., yₘ)* that are specific to elements of said engine;
· means (5) for identifying from said time-series measurements an exogenous data set *X = (x₁,...,xₙ)* representative of the external context acting on said set of indicators *Y;*
· means (5) for constructing for each indicator yⱼ of said set of indicators *Y,* a projection space *E^{(j)} = σ(Y^{(j)},X)* generated by analytic transformations of a subset of indicators *Y^{(j)}* = (y₁,...,yⱼ₋₁, yⱼ₊₁,...yₘ) comprising all of the indicators of said set of indicators *Y* except each said indicator *yⱼ,* and by said exogenous data set *X;*
· means (5) for calculating for each said indicator *yⱼ* of said set of indicators *Y* a corresponding estimator *ŷⱼ* by using a regression technique to project each said indicator *yⱼ* onto said projection space E^{(j)} *=* σ(Y^{(j)}, X), forming a set of estimators *Ŷ = (ŷ₁,..., ŷⱼ,..., ŷₘ)* corresponding to said set of indicators *Y = (y₁,..., yⱼ,..., yₘ) ;* and
· means (5) for normalizing each estimator ŷⱼ as a function of a reference value for the corresponding indicator *yⱼ* and of a difference between each said estimator *ŷⱼ* and said corresponding indicator yⱼ so as to form a set of standardized values *Ỹ =(ỹ₁,..., ỹⱼ,..., ỹₘ).*

14. A computer program including instructions for implementing the standardization method according to any one of claims 1 to 12 when it is executed by processor means.
